(19) Europäisches Patentamt
European Patent Office
Office européen des brevets

(11) **EP 2 881 367 A1**

(12) **EUROPÄISCHE PATENTANMELDUNG**

(43) Veröffentlichungstag:
**10.06.2015 Patentblatt 2015/24**

(21) Anmeldenummer: **13196231.8**

(22) Anmeldetag: **09.12.2013**

(51) Int Cl.:
*C01B 33/18* (2006.01)     *C09C 1/40* (2006.01)
*C09C 1/00* (2006.01)     *C09C 1/30* (2006.01)
*C09C 1/36* (2006.01)     *C01B 13/14* (2006.01)
*C01F 7/02* (2006.01)     *B01J 2/00* (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **Evonik Industries AG
45128 Essen (DE)**

(72) Erfinder:
• **Heindl, Frank
63517 Rodenbach (DE)**
• **Cadek, Anne
63500 Seligenstadt (DE)**
• **Drexel, Claus-Peter, Dr.
63263 Neu-Isenburg (DE)**

(54) **Verfahren zur Reduzierung des Staubanteiles von Metalloxidgranulaten**

(57)     Verfahren zur Reduzierung des Staubanteiles von Granulaten, bei dem man ein Granulat eines Metalloxides mit einem Pulver eines pyrogenen Metalloxides trocken mischt.

EP 2 881 367 A1

**Beschreibung**

Die Erfindung betrifft ein Verfahren zur Reduzierung des Staubanteiles von Metalloxidgranulaten. Die Erfindung betrifft weiterhin nach diesem Verfahren erhältliche Kieselsäuregranulate.

US 4,717,561 offenbart staubfreie Granulate von Fällungskieselsäuren, wobei die Granulate eine Größe von 140 bis 840 μm aufweisen. Staubfrei bedeutet dabei, dass der Anteil Kieselsäure mit einer Größe von weniger als 7,4 μm weniger als 4% beträgt. Dies wird durch Klassieren erreicht.

In EP-A-524386 wird ein Verfahren zur Reduzierung der Staubentwicklung von Kieselsäuren offenbart, bei dem eine nach dem Gelverfahren oder durch Fällung hergestellte Kieselsäure mit Paraffinöl, Silikonöl, pflanzlichem Öl und/oder Ethylenglykol behandelt wird.

In DE-A-19807700 werden Granulate von Fällungskieselsäuren offenbart, die einen niedrigen Staubanteil aufweisen. Sie werden erhalten, indem man eine Dispersion einer Fällungskieselsäure mittels einer Einstoffdüse in einem Düsenturm sprühtrocknet.

In EP-A-1241133 werden Kieselsäuren, die mindestens zwei Kieselsäurefraktionen enthalten offenbart. Hierdurch soll zum einen der Staubanteil verringert und die Dispergierbarkeit verbessert werden. "Kieselsäurefraktion" sind demnach verschiedene Sorten von Kieselsäuren, die aufgrund verschiedener Herstellungsverfahren oder -Varianten einen Unterschied von mindestens 10 % in mindestens einem Messwert für BET-Oberfläche, CTAB-Oberfläche und DBP-Aufnahme um mindestens 10 % unterscheiden. Die Kieselsäuren können auch aus Fraktionen von gefällten und pyrogenen Kieselsäuren hergestellt werden. Der jeweilige Anteil der Kieselsäurefraktionen kann beliebig variiert werden. Die Kieselsäure wird erhalten, indem man Dispersionen der Kieselsäurefraktionen sprühtrocknet. Es ist auch möglich, die Kieselsäurefraktionen im trockenen Zustand zu vermischen und nachfolgend zu resuspendieren und zu granulieren.

In EP-A-725037 werden Granulate pyrogener Kieselsäure, in WO03/014021 Granulate aus pyrogenem Aluminiumoxid, in DE-A-19928851 Granulate aus pyrogenem Titandioxid, in DE-A-10123950 Granulate aus Aluminiumoxid dotierter Kieselsäure und in WO2011/124435 Granulate aus pyrogenem Silicium-Titan-Mischoxid offenbart.

Im Stand der Technik sind zahlreiche Verfahren offenbart, die das Problem Staub beim Einsatz von Granulaten beschreiben. Im einfachsten Fall erfolgt die Abtrennung des Staubanteiles durch Klassieren. Hierbei sind zusätzliche Verfahrensschritte nötig. Ebenso wird offenbart, den Staubanteil durch Sprühgranulation von Dispersionen zu minimieren. Diese Methode eignet sich jedoch nicht für alle Metalloxidgranulate. In diesem Fall kann es vorteilhaft sein, Dispersionen aus unterschiedlichen Fraktionen eines Metalloxides sprühzutrocknen.

Es wurde jetzt gefunden, dass der Staubanteil deutlich reduziert werden kann, wenn man Metalloxidgranulate mit einem Pulver eines pyrogenen Metalloxides mischt.

Gegenstand der Erfindung ist daher ein Verfahren zur Reduzierung des Staubanteiles von Granulaten, bei dem man ein Granulat eines Metalloxides mit einem Pulver eines pyrogenen Metalloxides trocken mischt.

Unter Reduzierung des Staubanteiles im Rahmen der Erfindung ist zu verstehen, dass der Staubwert der eingesetzten Metalloxidgranulate um wenigstens 10%, bevorzugt wenigstens 30%, besonders bevorzugt wenigstens 50% und ganz besonders bevorzugt wenigstens 70% verringert wird.

Der maximale Staubwert der eingesetzten Metalloxidgranulate beträgt bevorzugt 70 bis 100, besonders bevorzugt 80 bis 95.

Der Staubwert der nach dem erfindungsgemäßen Verfahren erhaltenen Granulate beträgt bevorzugt weniger als 50, besonders bevorzugt 10 bis 50, ganz besonders bevorzugt 10 bis 35.

Die Staubzahl wird mit Hilfe des Staubmessgerätes Typ DustView (Palas GmbH, Karlsruhe, DE) ermittelt. Der mechanische Teil des Messgerätes besteht aus Probentrichter mit Klappe, Fallrohr und Staubraum mit herausnehmbarem Staubkasten. Bei der Bestimmung der Staubzahl werden staubende Anteile, welche nach definierter Beanspruchung des Materials, freier Fall und Aufprall, entstehen, quantitativ erfasst. Die Auswertung erfolgt optoelektronisch. Der staubende Feststoffanteil wirbelt in der Kammer auf. Die auftretende Staubentwicklung bedingt eine Abschwächung des Laserstahles (Extinktionsmessung), die photometrisch erfasst wird. Die Messwertregistrierung und Auswertung erfolgt in der Steuereinheit. Die maximale Lichtabschwächung (maximaler Staubwert) wird kurz nach Beginn der Messung erreicht und Messtechnisch 0,5 Sekunden nach Messbeginn erfasst.

$$\text{Staubwert}_{max} = \text{Staubwert nach 0,5 Sekunden}$$

Danach sinkt der Staub ab und die Extinktion des Laserstrahles wird geringer. Als zweiter Messwert wird der Staubwert nach 30 Sekunden erfasst.

$$\text{Staubwert}_{30s} = \text{Staubwert nach 30 s}$$

Weiterhin wird die Reduzierung des Staubwertes berechnet. Diese ist ein Maß dafür wie schnell sich der aufgewirbelte Staub absetzt. Sie errechnet sich gemäß der Formel:

$$\text{Reduzierung [\%]} = 100 - (\text{Staubwert}_{30s}/\text{Staubwert}_{max})*100$$

Unter einem pyrogenen Metalloxid ist eines zu verstehen, welches durch Flammenhydrolyse oder Flammenoxidation erhalten wird. Bei diesem Verfahren bringt man in der Regel ein verdampftes, hydrolysierbares Metallhalogenid in einer Flamme zur Reaktion, wobei die Flamme durch Verbrennung von Wasserstoff und eines sauerstoffhaltigen Gases gebildet worden ist. Die Flamme stellt dabei Wasser für die Hydrolyse des Metallhalogenides und genügend Wärme zur Hydrolysereaktion zur Verfügung. Bei dem Prozess werden zunächst Primärpartikel gebildet, die nahezu frei von inneren Poren sind. Diese Primärpartikel verschmelzen während des Prozesses über sogenannte "Sinterhälse" zu Aggregaten mit einer dreidimensionalen, offenen Struktur. Die Aggregate schließlich können sich zu Agglomeraten zusammenfinden, worin die Aggregate nur lose aneinander gebunden vorliegen. In der Regel können die Agglomerate bereits durch bereits durch geringe Schereinwirkung wieder in die Aggregate getrennt werden. Gemäß DIN 53206 weisen die Aggregate Durchmesser von 100 bis 1000 nm auf, die Agglomerate Durchmesser von >1 bis 500 $\mu$m auf.

Die besten Ergebnisse bezüglich der Staubreduzierung werden erhalten, wenn man 0,5 bis 3 Gew.-% eines Pulvers eines pyrogenen Metalloxides, bezogen auf das Granulat, einsetzt.

Ebenso ist es vorteilhaft, wenn das eingesetzte Granulat ein Sprühgranulat ist. Diese Granulate liegen in der Regel in einer weitgehend sphärischen Form vor. Sie können erhalten werden, indem man eine Metalloxid-Dispersion über eine Düse versprüht und trocknet.

Der mittlere Durchmesser $d_{50}$ des eingesetzten Granulates ist bevorzugt < 400 $\mu$m. In einer speziellen Ausführungsform gilt 10 < $d_{50}$ ≤ 100 $\mu$m, besonders bevorzugt ist 10 ≤ $d_{50}$ ≤ 60. Der $d_{10}$-Wert der Summenverteilung der Größenverteilungskurve des eingesetzten Granulates ist bevorzugt < 20 $\mu$m. In einer speziellen Ausführungsform gilt 1 < $d_{10}$ < 20 $\mu$m, besonders bevorzugt ist 5 ≤ $d_{10}$ ≤ 15. Der $d_{90}$-Wert der Summenverteilung der Größenverteilungskurve des eingesetzten Granulates ist bevorzugt < 500 $\mu$m. In einer speziellen Ausführungsform gilt 30 ≤ $d_{90}$ ≤ 200.

Die Bestimmung der Granulatdimensionen wird mittels einer dem Fachmann bekannten Methode mittels Laserbeugung erfolgen. Dabei kann das Granulat in wässriger Dispersion oder trocken vorliegen.

Der mittlere Partikeldurchmesser des Pulvers des pyrogenen Metalloxides beträgt nicht mehr 40 $\mu$m, in der Regel 50 nm bis 40 $\mu$m.

Bei dem in dem erfindungsgemäßen Verfahren eingesetzten Metalloxid handelt es sich vorzugsweise um eines, das aus der Gruppe bestehend aus Aluminiumoxid, Aluminiumoxid enthaltenden Mischoxiden, Kieselsäuren und Kieselsäure enthaltenden Mischoxiden ausgewählt wird. Im Rahmen der Erfindung soll dabei Kieselsäure als Halbmetall explizit mit erfasst sein. Als Mischoxide seien Silicium-Aluminium-Mischoxide, Silicium-Titan-Mischoxide oder Kalium-Silicium-Mischoxide genannt.

Das erfindungsgemäße Verfahren sieht vor, dass das dem Granulat zugrunde liegende Metalloxid und das dem pyrogenen Pulver zugrunde liegende Metalloxid chemisch gleich oder unterschiedlich sein können. So kann es sich bei dem Granulat um ein Granulat einer Fällungskieselsäure oder einer pyrogenen Kieselsäure und bei dem pyrogenen Pulver sich um eine pyrogene Kieselsäure handeln. Ebenso kann es sich bei dem Granulat um ein Granulat eines pyrogenen Aluminiumoxides und bei dem pyrogenen Pulver sich um eine pyrogene Kieselsäure handeln.

Als besonders geeignetes Pulver eines pyrogenen Metalloxides hat sich Kieselsäure erwiesen. Besonders bevorzugt sind pyrogene Kieselsäuren mit einer BET-Oberfläche von 90 bis 380 m$^2$/g, ganz besonders bevorzugt solche mit einer BET-Oberfläche von 150 bis 250 m$^2$/g.

Weiterhin hat sich als Pulver eines pyrogenen Metalloxides Aluminiumoxid als besonders geeignet erwiesen. Besonders bevorzugt sind pyrogene Aluminiumoxide mit einer BET-Oberfläche von 40 bis 200 m$^2$/g, ganz besonders bevorzugt solche mit einer BET-Oberfläche von 60 bis 130 m$^2$/g.

Als besonders geeignetes Granulat eines Metalloxides hat sich das Granulat einer Fällungskieselsäure erwiesen. Besonders bevorzugt sind Granulate aus Fällungskieselsäuren mit einer BET-Oberfläche von 50 bis 750 m$^2$/g, ganz besonders bevorzugt solche mit einer BET-Oberfläche von 100 bis 500 m$^2$/g.

Weiterhin hat sich das Granulat einer pyrogenen Kieselsäure als besonders geeignet erwiesen. Besonders bevorzugt sind Granulate pyrogener Kieselsäuren mit einer BET-Oberfläche von 40 bis 400 m$^2$/g, ganz besonders bevorzugt solche mit einer BET-Oberfläche von 170 bis 350 m$^2$/g.

Weiterhin hat sich das Granulat eines pyrogenen Aluminiumoxides als besonders geeignet erwiesen. Besonders bevorzugt sind Granulate pyrogener

Aluminiumoxide mit einer BET-Oberfläche von 40 bis 200 m$^2$/g, ganz besonders bevorzugt solche mit einer BET-Oberfläche von 60 bis 130 m$^2$/g.

Eine besondere Ausführungsform der Erfindung sieht vor, dass man

ein mittels Sprühtrocknung erhaltenes Granulat einer pyrogenen Kieselsäure mit einer BET-Oberfläche von 175 bis 330 $m^2$/g und einer mittleren

Granulatdurchmesser $d_{50}$ von 10 bis 100 $\mu$m, bevorzugt einem $d_{10}$-Wert von 1 bis 15 $\mu$m und einem

$d_{90}$-Wert von 30 bis 200 $\mu$m und als Pulver jeweils eine pyrogene Kieselsäure mit einer BET-Oberfläche von 175 bis 225 $m^2$/g einsetzt.

Eine weitere besondere Ausführungsform der Erfindung sieht vor, dass man

ein mittels Sprühtrocknung erhaltenes Granulat einer Fällungskieselsäure mit einer BET-Oberfläche von 50 bis 750 $m^2$/g und einer mittleren

Granulatdurchmesser $d_{50}$ von 20 bis 400 $\mu$m, bevorzugt einem $d_{10}$-Wert von 5 bis 50 $\mu$m und einem $d_{90}$-Wert von 50 bis 500 $\mu$m und als Pulver jeweils eine pyrogene Kieselsäure mit einer BET-Oberfläche von 175 bis 225 $m^2$/g einsetzt.

Bei dem erfindungsgemäßen Verfahren werden Granulat und Pulver trocken gemischt. Dies bedeutet, dass keine Flüssigkeiten eingesetzt werden. Es ist jedoch möglich, dass den Einsatzstoffen Feuchtigkeit anhaftet. Geeignete Vorrichtungen zum Mischen sind beispielsweise Taumelmischer, Trommelmischer, Turbula-Mischer, Pflugscharmischer oder Schaufelmischer.

Es kann vorteilhaft sein, wenn das Metalloxidpulver desagglomeriert eingesetzt wird. Zum Desagglomerieren eignen sich beispielsweise Stiftmühlen, Hammermühlen, Gegenstrommühlen oder Prallmühlen.

Ein weiterer Gegenstand der Erfindung ist ein nach dem erfindungsgemäßen Verfahren erhältliches Kieselsäuregranulat.

In einer besonderen Ausführungsform handelt es sich um ein Kieselsäuregranulat von pyrogener Kieselsäure, welches

a) einen mittleren Durchmesser von $15 \le d_{50} \le 50$ $\mu$m,
b) eine BET-Oberfläche von 250 bis 350 $m^2$/g und
c) einen Staubwert nach 30 s von höchstens 50, bevorzugt 5 bis 40, besonders bevorzugt 5 bis 30 aufweist.

In einer weiteren besonderen Ausführungsform handelt es sich um ein Kieselsäuregranulat, welches

a) einen mittleren Durchmesser von $60 \le d_{50} \le 150$ $\mu$m,
b) eine BET-Oberfläche von 175 bis 225 $m^2$/g und
c) einen Staubwert nach 30 s von höchstens 15, bevorzugt 8 -12, aufweist.

**Beispiele**

Bestimmung der Pulver und Granulatdimensionen

Es wird das Laserbeugungsgerät LS 230 mit einem Messbereich von 0,04 - 2000 $\mu$m) und einem Flüssigkeits-modul Small Volume Module Plus, 120 ml, beide Fa. Beckmann Coulter eingesetzt. Die Feststoffe werden als Dispersion vermessen, mit 0,05 % m/m Tetra-Natriumdiphosphat in VE-Wasser oder einem Ethanol/Wassergemisch (Volumenverhältnis 1:1) als Dispergierflüssigkeit vermessen. Das Gerät ist wie folgt eingestellt: Messzeit 60 Sekunden; Anzahl der Messungen: 1; Pumpengeschwindigkeit: 75 %; Optisches Modell: Fraunhofer; PIDS-Funktion: deaktiviert; Offsetmessung: aktiviert; Justierung: Auto; Hintergrundmessung: aktiviert; Probenkonzentration einstellen: aktiviert Mittels Spatel erfolgt die Zugabe der Feststoffe bis zum Erreichen der erforderlichen Messkonzentration, die der Laserbeuger LS 230 mit "OK" meldet. Nach Dispergierung der Kieselsäuresuspension für 60 Sekunden durch Umpumpen ohne Ultrabeschallung erfolgt die Messung bei Raumtemperatur. Aus der Rohdatenkurve berechnet die Software auf Basis des Fraunhofer Modells (Fraunhofer.rfd-Datei) die Partikelgrößenverteilung und den $d_{50}$-Wert ohne Ultraschalleinwir-kung (Medianwert).

Einsatzstoffe

Metalloxidgranulate

Typ 1: Granulat auf Basis einer pyrogenen Kieselsäure mit einer BET-Oberfläche von 300 $m^2$/g und einem mittleren Granulatdurchmesser $d_{50}$ von 30 $\mu$m.

Typ 2: Granulat auf Basis eines pyrogenen Aluminiumoxides mit einer BET-Oberfläche von 100 $m^2$/g und einem mittleren Granulatdurchmesser $d_{50}$ von 30 $\mu$m.

Typ 3: Granulat auf Basis eines pyrogenen Titandioxides mit einer BET-Oberfläche von 50 $m^2$/g und einem mittleren Granulatdurchmesser $d_{50}$ von 20 $\mu$m.

Typ 4: Granulat auf Basis einer mit 0,187 Gew.-% Aluminiumoxid dotierten pyrogenen Kieselsäure mit einer BET-Oberfläche von 203 m$^2$/g erhältlich nach DE-A-19847161 und einem mittleren Granulatdurchmesser d$_{50}$ von 30 µm.

Die Metalloxidgranulate des Types 1-4 können nach dem in EP-A-725037 offenbarten Verfahren erhalten werden.

Typ 5: Granulat auf Basis einer Fällungskieselsäure mit einer BET-Oberfläche von 190 m2/g und einem mittleren Granulatdurchmesser d$_{50}$ von 110 µm.

Typ 6: Granulat auf Basis einer Fällungskieselsäure mit einer BET-Oberfläche von 185 m2/g und einem mittleren Granulatdurchmesser d$_{50}$ von 320 µm.

Pyrogene Metalloxidpulver

Typ 7: AEROSIL® 200, pyrogene Kieselsäure mit einer BET-Oberfläche von ca. 200 m$^2$/g.

Typ 8: AEROSIL® 300, pyrogene Kieselsäure mit einer BET-Oberfläche von ca. 300 m$^2$/g. Typ 9: AEROXIDE® Alu C, pyrogenes Aluminiumoxid mit einer BET-Oberfläche von ca. 100 m$^2$/g.

Typ 10: pyrogenes Aluminiumoxid mit einer BET-Oberfläche von ca. 130 m$^2$/g.

Typ 11: AEROXIDE® TiO$_2$ P25, pyrogenes Titandioxid mit einer BET-Oberfläche von ca. 50 m$^2$/g.

Typ 12: Mit 0,187 Gew.-% Aluminiumoxid dotierte pyrogene Kieselsäure mit einer BET-Oberfläche von 203 m$^2$/g erhältlich nach DE-A-19847161.

Das Mischen der Metalloxidgranulate und der Metalloxidpulver erfolgt für alle Beispiele 2,3 und 4 mittels Turbula-Mischer. Die Drehzahl beträgt 45 U/Min, die Mischzeit 15 Minuten.

In den Beispielen 1,5 und 6 wird ein Somakon-Mischer, Standardmischkreuz mit 4mm U-Scheibe und Wendel, verwendet. Die Drehzahl beträgt 1200 U/Min, die Mischzeit 5 Minuten.

Die pyrogenen Metalloxidpulver der Beispiele 1_2, 2_1 bis 2_4, 3_1 und 4_1 bis 4_3 werden vor dem Mischen mit dem Granulat mittels einer IKA® A10 Analysenmühle desagglomeriert.

Die Beispiele mit dem Index "0" sind Vergleichsbeispiele.

**Tabelle:** Mischungen von Metalloxidgranulaten mit pyrogenen Metalloxidpulvern; Staubwerte der Gemische

| Beispiel | Metalloxidgranulat | | Pyrogenes Metalloxidpulver | | Staubwert | | | |
|---|---|---|---|---|---|---|---|---|
| | Typ | g | Typ | Gew.-% | Einwaage g | Max | 30 s | Reduzierung [%] |
| 1_0 | 1 | 50 | - | - | 20 | 95 | 61 | 36 |
| 1_1 | 1 | 50 | 7 | 5,0 | 20 | 93 | 11 | 88 |
| 1_2 | 1 | 50 | 7 | 2,0 | 20 | 98 | 15 | 85 |
| 1_3 | 1 | 50 | 8 | 2,0 | 20 | 91 | 29 | 68 |
| 2_0 | 2 | 100 | - | - | 40 | 90 | 77 | 14 |
| 2_1 | 2 | 100 | 9 | 2,0 | 40 | 89 | 36 | 60 |
| 2_2 | 2 | 50 | 9 | 1,0 | 40 | 89 | 58 | 35 |
| 2_3 | 2 | 50 | 7 | 0,5 | 40 | 88 | 54 | 39 |
| 2_4 | 2 | 50 | 10 | 1,0 | 40 | 93 | 61 | 34 |
| 3_0 | 3 | 100 | - | - | 50 | 88 | 31 | 65 |
| 3_1 | 3 | 100 | 11 | 1,0 | 50 | 87 | 25 | 71 |
| 4_0 | 4 | 50 | - | - | 40 | 87 | 46 | 47 |
| 4_1 | 4 | 50 | 7 | 1,0 | 40 | 81 | 30 | 63 |
| 4_2 | 4 | 50 | 7 | 2,0 | 40 | 94 | 21 | 78 |
| 4_3 | 4 | 50 | 12 | 2,0 | 40 | 93 | 47 | 49 |
| 5_0 | 5 | 50 | - | - | 30 | 79 | 52 | 18 |
| 5_1 | 5 | 50 | 7 | 1,0 | 30 | 81 | 32 | 60 |
| 6_0 | 6 | 50 | - | - | 30 | 24 | 12 | 50 |
| 6_1 | 6 | 50 | 7 | 0,6 | 30 | 24 | 8 | 67 |

**Patentansprüche**

1. Verfahren zur Reduzierung des Staubanteiles von Granulaten, **dadurch gekennzeichnet, dass** man ein Granulat eines Metalloxides mit einem Pulver eines pyrogenen Metalloxides trocken mischt.

2. Verfahren nach Anspruch 1, **dadurch gekennzeichnet, dass** man 0,5 bis 3 Gew.-%, bezogen auf das Granulat, eines Pulvers eines pyrogenen Metalloxides einsetzt.

3. Verfahren nach Anspruch 1 oder 2, **dadurch gekennzeichnet, dass** das eingesetzte Granulat ein Sprühgranulat ist.

4. Verfahren nach den Ansprüchen 1 bis 3, **dadurch gekennzeichnet, dass** der mittlere Durchmesser $d_{50}$ des eingesetzten Granulates < 400 $\mu$m ist.

5. Verfahren nach den Ansprüchen 1 bis 4, **dadurch gekennzeichnet, dass** der $d_{10}$-Wert der Summenverteilung der Größenverteilungskurve des eingesetzten Granulates < 20 $\mu$m und der $d_{90}$-Wert der Summenverteilung der Größenverteilungskurve des eingesetzten Granulates < 500 $\mu$m ist.

6. Verfahren nach den Ansprüchen 1 bis 5, **dadurch gekennzeichnet, dass** der mittlere Partikeldurchmesser des Pulvers des pyrogenen Metalloxides nicht mehr als 40 $\mu$m ist.

7. Verfahren nach den Ansprüchen 1 bis 6, **dadurch gekennzeichnet, dass** das Metalloxid aus der Gruppe bestehend aus Aluminiumoxid, Aluminiumoxid enthaltenden Mischoxiden, Kieselsäuren und Kieselsäure enthaltenden Mischoxiden ausgewählt wird.

8. Verfahren nach den Ansprüchen 1 bis 7, **dadurch gekennzeichnet, dass** als Pulver eine pyrogene Kieselsäure oder eine pyrogenes Aluminiumoxid eingesetzt wird.

9. Verfahren nach den Ansprüchen 1 bis 7, **dadurch gekennzeichnet, dass** als Granulat eine Fällungskieselsäure oder eine pyrogene Kieselsäure oder ein pyrogenes Aluminiumoxid eingesetzt wird.

10. Verfahren nach Anspruch 1, **dadurch gekennzeichnet, dass** man ein mittels Sprühtrocknung erhaltenes Granulat einer pyrogenen Kieselsäure mit einer BET-Oberfläche von 175 bis 330 m$^2$/g und einem mittleren Granulatdurchmesser $d_{50}$ von 10 bis 100 $\mu$m oder
ein mittels Sprühtrocknung erhaltenes Granulat einer Fällungskieselsäure mit einer BET-Oberfläche von 50 bis 750 m$^2$/g und einem mittleren Granulatdurchmesser $d_{50}$ von 20 bis 400 $\mu$m und
als Pulver jeweils eine pyrogene Kieselsäure mit einer BET-Oberfläche von 175 bis 225 m$^2$/g einsetzt.

11. Verfahren nach den Ansprüchen 1 bis 10, **dadurch gekennzeichnet, dass** das Mischen mittels eines Taumelmischers, Trommelmischers, Turbula-Mischers, Pflugscharmischer oder Schaufelmischer erfolgt.

12. Verfahren nach den Ansprüchen 1 bis 11, **dadurch gekennzeichnet, dass** das Metalloxidpulver desagglomeriert eingesetzt wird.

13. Kieselsäuregranulat erhältlich nach dem Verfahren gemäß der Ansprüche 1 bis 12.

14. Kieselsäuregranulat, **dadurch gekennzeichnet**, das es

a) einen mittleren Durchmesser von 15 $\leq d_{50} \leq$ 50 $\mu$m,
b) eine BET-Oberfläche von 250 bis 350 m$^2$/g und
c) eine Staubwert nach 30 s von höchstens 50 aufweist.

15. Kieselsäuregranulat, **dadurch gekennzeichnet, dass** es

a) einen mittleren Durchmesser von 60 $\leq d_{50} \leq$ 150 $\mu$m,
b) eine BET-Oberfläche von 175 bis 225 m$^2$/g und
c) eine Staubwert nach 30 s von höchstens 15 aufweist.

Europäisches
Patentamt

European
Patent Office

Office européen
des brevets

**EUROPÄISCHER RECHERCHENBERICHT**

Nummer der Anmeldung

EP 13 19 6231

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 241 134 A2 (DEGUSSA [DE]) 18. September 2002 (2002-09-18) * Absatz [0016] - Absatz [0021] * * Beispiel 4 * ----- | 1-13 | INV. C01B33/18 C09C1/40 C09C1/00 C09C1/30 |
| X | EP 1 241 132 A2 (DEGUSSA [DE]) 18. September 2002 (2002-09-18) * Absatz [0016] - Absatz [0021] * * Beispiel 4 * ----- | 1-13 | C09C1/36 C01B13/14 C01F7/02 B01J2/00 |
| X,D | EP 1 241 133 A2 (DEGUSSA [DE] EVONIK DEGUSSA GMBH [DE]) 18. September 2002 (2002-09-18) * Absatz [0018] - Absatz [0022] * * Beispiel 6 * ----- | 1-13 | |

RECHERCHIERTE
SACHGEBIETE (IPC)

C01B
C09C
C01F
B01J

~~Der vorliegende Recherchenbericht wurde für alle Patentans~~prüche erstellt

| Recherchenort | Abschlußdatum der Recherche | Prüfer |
|---|---|---|
| Den Haag | 9. Mai 2014 | Sevillano Rodriguez |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes
    Dokument

EPO FORM 1503 03.82 (P04C03)

Europäisches
Patentamt

European
Patent Office

Office européen
des brevets

**Nummer der Anmeldung**

EP 13 19 6231

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1-13

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

Nummer der Anmeldung

EP 13 19 6231

Nach Auffassung der Recherchenabteilung entspricht die vorliegende europäische Patentanmeldung nicht den
Anforderungen an die Einheitlichkeit der Erfindung und enthält mehrere Erfindungen oder Gruppen von
Erfindungen, nämlich:

1. Ansprüche: 1-13

Verfahren zur Reduzierung des Staubsanteiles von Granulaten
und resultierenden Kieselsäuregranulaten
---

2. Anspruch: 14

Kieselsäuregranulat mit mittlerem Durchmesser von 15 bis 50
Mikrometer und BET-Oberfläche von 250 bis 350 m2/g
---

3. Anspruch: 15

Kieselsäuregranulat mit mittlerem Durchmesser von 60 bis 150
Mikrometer und BET-Oberfläche von 175 bis 225 m2/g
---

**ANHANG ZUM EUROPÄISCHEN RECHERCHENBERICHT
ÜBER DIE EUROPÄISCHE PATENTANMELDUNG NR.**

EP 13 19 6231

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-05-2014

| Im Recherchenbericht angeführtes Patentdokument | Datum der Veröffentlichung | Mitglied(er) der Patentfamilie | Datum der Veröffentlichung |
|---|---|---|---|
| EP 1241134 A2 | 18-09-2002 | CA 2376843 A1 | 16-09-2002 |
| | | CN 1375453 A | 23-10-2002 |
| | | DE 10112651 A1 | 19-09-2002 |
| | | EP 1241134 A2 | 18-09-2002 |
| | | JP 2002326809 A | 12-11-2002 |
| | | MX PA01012873 A | 23-09-2002 |
| | | US 2003059380 A1 | 27-03-2003 |
| EP 1241132 A2 | 18-09-2002 | CN 1375452 A | 23-10-2002 |
| | | DE 10112650 A1 | 19-09-2002 |
| | | EP 1241132 A2 | 18-09-2002 |
| | | JP 2002338233 A | 27-11-2002 |
| | | US 2003068281 A1 | 10-04-2003 |
| EP 1241133 A2 | 18-09-2002 | AT 534610 T | 15-12-2011 |
| | | BR 0200815 A | 07-01-2003 |
| | | CA 2376749 A1 | 16-09-2002 |
| | | DE 10112652 A1 | 19-09-2002 |
| | | EP 1241133 A2 | 18-09-2002 |
| | | ES 2376846 T3 | 20-03-2012 |
| | | JP 2002338234 A | 27-11-2002 |
| | | JP 2009132615 A | 18-06-2009 |
| | | MX PA01011614 A | 10-11-2004 |
| | | TW 541284 B | 11-07-2003 |
| | | US 2003037706 A1 | 27-02-2003 |
| | | ZA 200202140 A | 15-10-2002 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4717561 A
- EP 524386 A
- DE 19807700 A
- EP 1241133 A
- EP 725037 A

- WO 03014021 A
- DE 19928851 A
- DE 10123950 A
- WO 2011124435 A
- DE 19847161 A